(19)

**Europäisches Patentamt**
**European Patent Office**
**Office européen des brevets**

(11) **EP 2 107 816 A2**

(12) **EUROPEAN PATENT APPLICATION**

(43) Date of publication:
**07.10.2009 Bulletin 2009/41**

(51) Int Cl.:
**H04N 13/00** (2006.01)

(21) Application number: **09250763.1**

(22) Date of filing: **19.03.2009**

| | |
|---|---|
| (84) Designated Contracting States:<br>**AT BE BG CH CY CZ DE DK EE ES FI FR GB GR HR HU IE IS IT LI LT LU LV MC MK MT NL NO PL PT RO SE SI SK TR**<br>Designated Extension States:<br>**AL BA RS**<br><br>(30) Priority: **31.03.2008 JP 2008089703**<br><br>(71) Applicant: **Fujifilm Corporation**<br>**Tokyo 106-0031 (JP)** | (72) Inventors:<br>• **Masuda, Tomonori**<br>**Kurokawa-gun, Miyagi (JP)**<br>• **Watanabe, Mikio**<br>**Kurokawa-gun, Miyagi (JP)**<br><br>(74) Representative: **Stevens, Jason Paul**<br>**Frank B. Dehn & Co.**<br>**St Bride's House**<br>**10 Salisbury Square**<br>**London**<br>**EC4Y 8JD (GB)** |

(54) **Stereoscopic display apparatus, stereoscopic display method, and program**

(57)     A stereoscopic display apparatus (1) displays a catalogue of images as planar images or stereoscopic images. When one of the images is selected from the displayed catalogue, the stereoscopic display apparatus then converts the stereoscopic appearance of the at least one selected image (from planar to stereoscopic or from stereoscopic to planar). It is thus easier to see which image has been selected.

The invention also extends to a stereoscopic display method and a program for carrying out the method.

# FIG.3A

ONLY SELECTED IMAGE IS STEREOSCOPICALLY DISPLAYED

OTHER IMAGES ARE PLANAR IMAGES

EP 2 107 816 A2

## EP 2 107 816 A2

**Description**

The present invention relates to a stereoscopic display apparatus, a stereoscopic display method, and a program for displaying a stereoscopic image that enables stereoscopic viewing. More specifically, the present invention relates to catalogue display of a plurality of images.

It has been known that stereoscopic vision can be realized by displaying a plurality of images combined with use of parallax. A stereoscopic image that enables stereoscopic viewing can be generated by obtaining a plurality of images through photography of the same subject at different positions with a plurality of cameras, and by combining the images with use of parallax of the subject in the images.

More specifically, a stereoscopic image can be generated by overlapping a plurality of images in such a manner that colours such as red and cyan or polarization directions thereof are different from each other. In this case, the image can be viewed stereoscopically by fusing the displayed images according to automatic focusing function of eyes with use of glasses such as red/cyan glasses or polarized glasses to view the images separately (these methods are referred to as an anaglyph method and a polarizing filter method, respectively).

In addition, without use of polarized glasses or the like, a stereoscopic image can be viewed stereoscopically by display of the image on a 3D liquid crystal display adopting a parallax barrier method or a lenticular method. In this case, by alternately arranging images cut vertically in a strip-like shape, a stereoscopic image can be generated. Furthermore, a stereoscopic image can be displayed by alternately displaying right and left images with use of glasses to view the images separately (this method is referred to as a time division method).

As a display device that can display a stereoscopic image in a manner as has been described above, an image reproduction apparatus that displays stereoscopic image data as thumbnails has been proposed in JP 2008-005203.

However, when a plurality of thumbnail images are displayed by the image reproduction apparatus described in JP 2008-005203, the images are all displayed as either planar images or stereoscopic images (see claim 12 and Figure 14 of JP 2008-005203). Therefore, if the images are all displayed as a large number of stereoscopic images in a catalogue, a user cannot easily confirm the respective images therein.

The present invention has been conceived based on consideration of the above circumstances. An object of the present invention is therefore to provide a stereoscopic display apparatus that enables easy-to-see catalogue display of a plurality of images.

A stereoscopic display apparatus of the present invention is a stereoscopic display apparatus that generates and displays a stereoscopic image from at least a pair of planar images, and the apparatus comprises:

a display for displaying a catalogue of images as planar images or stereoscopic images;
an image selector for selecting at least one of the images from the catalogue displayed on the display; and
a display converter for converting the stereoscopic appearance of the at least one image selected by the image selector.

In the stereoscopic display apparatus of the present invention, the display converter can convert the stereoscopic appearance by changing a parallax of a subject included in the at least one selected image.

In this case, the display converter can add the parallax to the subject in the at least one selected image when the images are being displayed as the planar images in the catalogue. In addition, the display converter can eliminate the parallax of the subject in the at least one selected image when the images are being displayed as the stereoscopic images in the catalogue.

In the stereoscopic display apparatus of the present invention, the display converter can move the at least one selected image relatively to the other images.

The display converter of the stereoscopic display apparatus of the present invention may enlarge the at least one selected image.

A stereoscopic display method of the present invention is a stereoscopic display method that generates and displays a stereoscopic image from at least a pair of planar images, and the method comprises the steps of:

displaying a catalogue of images as planar images or stereoscopic images;
selecting at least one of the images from the displayed catalogue; and
converting the stereoscopic appearance of the at least one selected image.

A stereoscopic display program of the present invention is a stereoscopic display program that causes a computer to generate and display a stereoscopic image from at least a pair of planar images, and the program comprises the procedures of:

displaying a catalogue of images as planar images or stereoscopic images;

selecting at least one of the images from the displayed catalogue; and
converting the stereoscopic appearance of the at least one selected image.

According to the stereoscopic display apparatus, the stereoscopic display method, and the program of the present invention, the plurality of images are displayed as the planar images or the stereoscopic images in the catalogue, and at least one of the images is selected from the displayed catalogue. The stereoscopic appearance of the at least one selected image is then converted and displayed. Therefore, by causing the stereoscopic appearance of the at least one selected image to be different from the other images, a user can confirm the at least one selected image more easily. In addition, not all the images are displayed stereoscopically in the catalogue. Consequently, a displayed screen can be easier to view.

Preferred embodiments will now be described by way of example only and with reference to the accompanying drawings, in which:

Figure 1 is a block diagram showing the configuration of a stereoscopic display apparatus of an embodiment of the present invention;
Figure 2 is a flow chart showing a flow of stereoscopic display processing by the stereoscopic display apparatus in Figure 1;
Figure 3A shows a first example of catalogues of planar images for right and left eyes and a catalogue;
Figure 3B shows a method of changing a parallax of a subject included in an image;
Figure 4 shows a second example of catalogues of planar images for right and left eyes and a catalogue;
Figure 5 shows a third example of catalogues of planar images for right and left eyes and a catalogue;
Figure 6 shows a manner of stereoscopic appearance conversion by a display conversion unit;
Figure 7 shows another manner of stereoscopic appearance conversion by the display conversion unit;
Figure 8 shows still another manner of stereoscopic appearance conversion by the display conversion unit; and
Figure 9 shows how a parallax is added in the case of making a stereoscopic image appear to pop out with a frame.

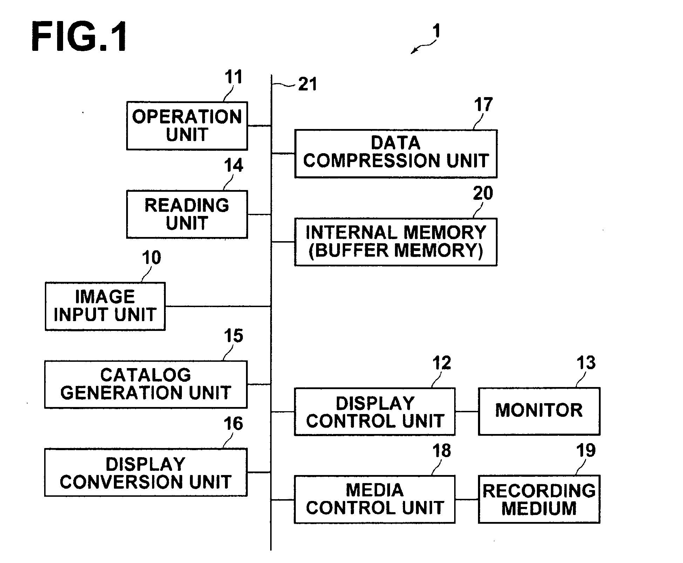

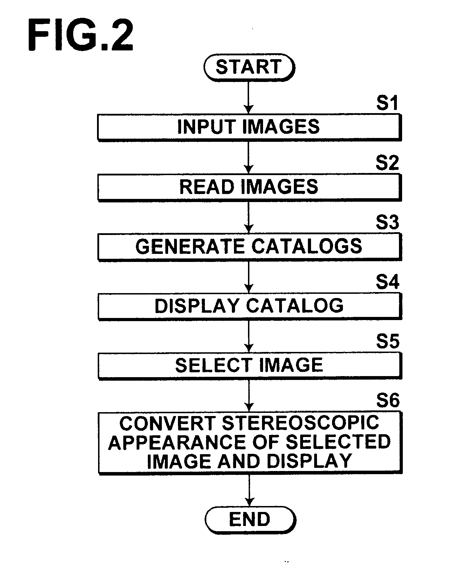

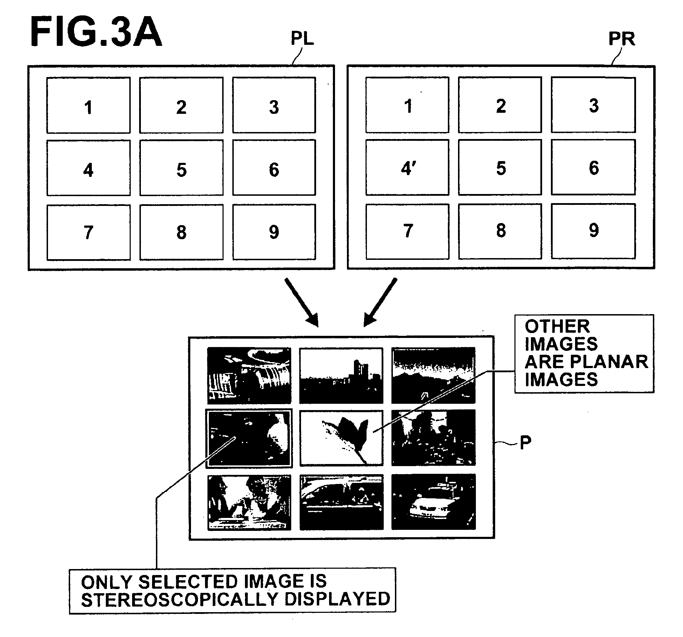

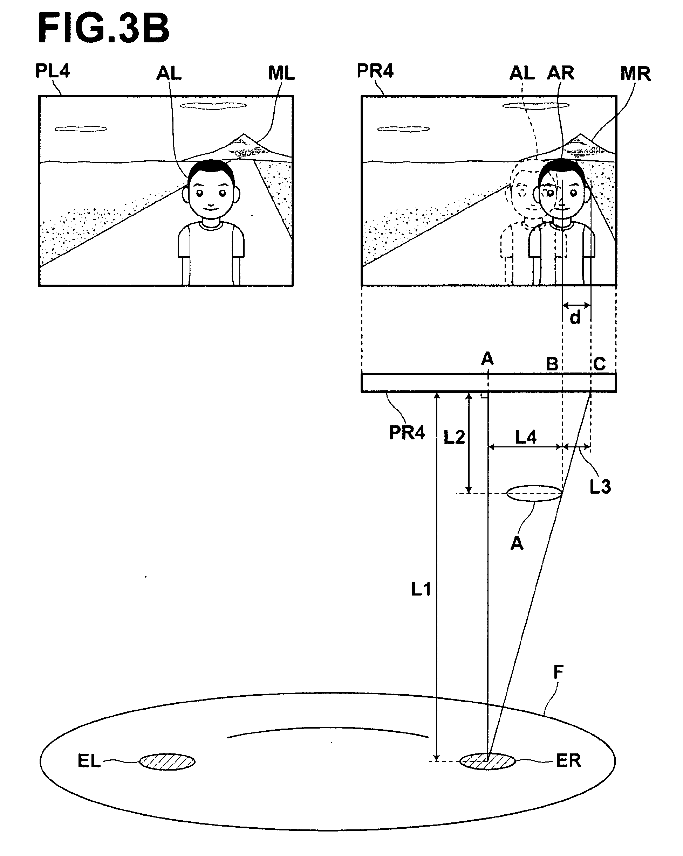

Hereinafter, a stereoscopic display apparatus 1 of an embodiment of the present invention will be described in detail with reference to the accompanying drawings. Figure 1 is a block diagram showing the configuration of the stereoscopic display apparatus 1 in this embodiment. Figure 2 is a flow chart showing a flow of stereoscopic display processing by the stereoscopic display apparatus in Figure 1. Figure 3A shows a first example of planar image catalogues PL and PR for left and right eyes and a catalogue P. Figure 3B shows an example of a method of changing a parallax of a subject included in an image.

The stereoscopic display apparatus 1 in this embodiment generates a stereoscopic image from at least a pair of planar images and displays the stereoscopic image. As shown in Figure 1, the apparatus 1 comprises an image input unit 10, an operation unit (an image selector) 11, a display control unit 12, a monitor (a display) 13, a reading unit 14, a catalogue generation unit 15, a display conversion unit (a display converter) 16, a data compression unit 17, a media control unit 18, a recording medium 19, an internal memory 20, and the like, all of which send and receive various kinds of signals and data via a data bus 21.

The image input unit 10 inputs image files or data sets of stereoscopic images and planar image data sets (hereinafter collectively referred to as the image data sets and the like). The image input unit 10 can input various kinds of data stored in the recording medium 19 or the internal memory 20 that will be described later, by reading the data via the media control unit 18. The image input unit 10 can also read and input various kinds of data via a wired or wireless network.

The data sets of stereoscopic images refer to data sets each generated by combining data sets of planar images for right and left eyes obtained by photography of a subject from two different viewpoints, and realize stereoscopic vision by using a parallax of the subject in the planar images for right and left eyes arranged side by side. Each of the files of stereoscopic images may be one image file generated to include images for right and left eyes and having a header including information representing that the file includes the images for right and left eyes, information on positions of the images, and the like. Alternatively, each of the files may be generated as separate files having filenames relating the images for right and left eyes.

The operation unit (the image selector) 11 comprises a mouse, a keyboard, and various kinds of buttons, for example. A user can carry out various kinds of setting by operating the operation unit 11. When a catalogue of images is displayed as will be described later, the user can select at least one of the displayed images from the catalogue by operating the operation unit 11.

The display control unit 12 causes the monitor 13 to display various kinds of images, setting menus, and the like. The display control unit 12 also causes the monitor 13 to display various kinds of images represented by the image data sets and the like recorded in the recording medium 19 and read by the media control unit 18 as will be described later.

The monitor 13 is to display planar images and/or stereoscopic images via the display control unit 12. For example, the display 13 enables stereoscopic viewing of an image by adopting a parallax barrier method or a lenticular method. In a parallax barrier method, a planar image for left eye (hereinafter also referred to as a left-eye image) and a planar image for right eye (hereinafter also referred to as a right-eye image) are cut vertically into strips displayed alternately. A viewer views the images through slits cut vertically in the same manner, and the planar images for right and left eyes are respectively seen by the right and left eyes of the viewer. In a lenticular method, a lenticular lens is used instead of the slits, and the images are viewed in the same manner. Alternatively, a right-eye image and a left-eye image displayed on two screens or in right and left of one screen may be viewed by the right and left eyes, respectively. In addition, a space division method may be adopted.

The monitor 13 in this embodiment may adopt any method as long as stereoscopic image viewing can be realized. The monitor 13 may also adopt a so-called scanning backlight method in which a light path changes in time series as has been described in US 7210836, for example. Alternatively, the monitor 13 may use a time division method wherein a left-eye image and a right-eye image are displayed alternately and an image is stereoscopically viewed with use of glasses to view the images separately. The monitor 13 also displays the various kinds of menus and the like that are operated with use of the operation unit 11.

The reading unit 14 reads any number of the image data sets and the like selected by operation of the operation unit 11 from the image data sets and the like inputted by the image input unit 10. In the case where any one or more of the stereoscopic image files have been selected, the reading unit 14 reads the various kinds of information in the header thereof.

The catalogue generation unit 15 reduces and arranges the image data sets and the like read by the reading unit 14, and generates a pair of the planar image catalogues. For example, in the case where nine image data sets have been read, two planar image catalogues each having nine images arranged in three rows and three columns are generated as shown in Figure 3A. The manner of arranging the images may be set arbitrarily by operation of the operation unit 11 in advance. One of the two planar image catalogues is the left-eye image catalogue PL while the other is the right-eye image catalogue PR.

When the operation unit 11 is operated to cause the nine images to be displayed as planar images on the monitor 13, in the case where the reading unit 14 has read the image data sets or files of stereoscopic images, either the left-eye images or the right-eye images represented by the data sets or files are reduced and arranged in the left-eye image catalogue PL and in the right-eye image catalogue PR. In the case where the image data sets and the like read by the reading unit 14 are the planar image data sets, the planar images represented by the data sets are reduced and arranged respectively in the left-eye image catalogue PL and the right-eye image catalogue PR.

When the operation unit 11 is operated to display the nine images as a stereoscopic image catalogue on the monitor 13, in the case where the reading unit 14 has read the data sets or files of stereoscopic images, the left-eye images and right-eye images are respectively reduced and arranged in the left-eye image catalogue PL and the right-eye image catalogue PR.

In the case where the reading unit 14 has read the planar image data sets, the images represented by the planar image data sets are respectively reduced and arranged in the left-eye image catalogue PL and the right-eye image catalogue PR.

As shown in Figure 3B, for the case of a planar image PR4 in the right-eye image catalogue PR, a region including a person (subject) AL is extracted therefrom. Let L1 denote a recommended viewing distance for a viewer F from the monitor 13, and let A denote a point in the planar image catalogue PR at which the right eye (shown as "ER" in Figure 3B) of the viewer F looks perpendicularly. In order to make the person AL that is located to the right of the point A by a distance L4 appear to pop out to the viewer F by a distance L2, a distance L3 to move the person AL, that is, a parallax is determined so as to satisfy Equation (2) derived from Equation (1) below. The person AL is then moved to the right by L3 to become a person AR. At this time, a region remaining after extraction of the region including the person AL in the right-eye image PR4 is subjected to interpolation processing by using a corresponding left-eye image PL4.

$$L3:L2 = (L3+L4):L1 \qquad (1)$$

$$L3 = L2{\times}L4/(L1-L2) \qquad (2)$$

where L2 is a value that is changed according to setting of the stereoscopic appearance of the person AL.

In this embodiment, since the person AL in the right-eye image PR4 is located right of the point A, the person AL can look closer to the viewer F by being moved to the right therein. In the case where the person AL is located to the left of the point A, the person AL can look closer to the viewer F by being moved to the left.

In the case where the person AL is caused to appear behind to the eyes of the viewer F, the person AL is moved to the left in the case where the person AL is located to the right of the point A. In the case where the person AL is located to the left of the point A, the person AL is caused to recede to the eyes of the viewer F by being moved to the right. For the left-eye image PL4 in the left-eye image catalogue PL, the person AL is moved by using the same principle as for the right-eye image PR4. In this manner, the parallax is added to the subject in the left-eye image PL4 (shown as "4" in Figure 3A) and the right-eye image catalogue PR4 (shown as "4'" in Figure 3A).

For all the images, the same processing is carried out. In this manner, a parallax is added to each of subjects in the left-eye images and the right-eye images, and the nine images (denoted by 1 to 9 in Figure 3A) displayed in the catalogue P on the monitor 13 can be viewed stereoscopically.

When at least one of the images is selected from the catalogue displayed on the monitor 13 with use of the operation unit 11, the display conversion unit 16 converts the stereoscopic appearance of the at least one selected image, and displays the at least one selected image having been converted on the monitor 13. How the stereoscopic appearance is converted will be described later in detail.

The data compression unit 17 compresses the various kinds of image data sets and the like, and the compressed image data sets and the like are recorded in the recording medium 19 via the media control unit 18.

The media control unit 18 reads and writes the image data sets and the like from and in the recording medium 19. The recording medium (recording means) 19 is a recording medium that can store the various kinds of image data sets and the like, and comprises a magnetic or optical recording medium or a semiconductor memory, for example.

The internal memory 20 stores various kinds of constants set in the stereoscopic display apparatus 1, programs, and the like, and functions as a buffer memory for storing the various kinds of image data sets and the like inputted by the image input unit 10 and the pair of image catalogues generated by the catalogue generation unit 15.

The configuration of the stereoscopic display apparatus 1 in this embodiment has been described above. The image processing carried out by the stereoscopic display apparatus 1 will be described next. The flow chart in Figure 2 shows the flow of stereoscopic display processing by the stereoscopic display apparatus 1.

As shown in Figure 2, the image input unit 10 of the stereoscopic display apparatus 1 firstly inputs the image data sets and the like (Step S1), and the reading unit 14 reads a portion of the image data sets and the like selected from the inputted image data sets and the like with use of the operation unit 11 (Step S2).

The catalogue generation unit 15 reduces the images represented by the image data sets and the like read by the reading unit 14, and arranges the images to generate the left-eye image catalogue PL and the right-eye image catalogue PR as has been described above (Step S3). The catalogue P is displayed via the display control unit 12, enabling stereoscopic viewing by using the left-eye image catalogue PL and the right-eye image catalogue PR as has been described above (Step S4).

At least one of the images is selected from the catalogue displayed on the monitor 13, with use of the operation unit 11 (Step S5). The display conversion unit 16 then converts the stereoscopic appearance of the at least one selected image, and displays the at least one selected image having been converted (Step S6).

For example, in the case where the image 4 has been selected with use of the operation unit 11 from the nine images displayed as planar images as shown by the images in a lower portion of Figure 3A, the conversion by the display conversion unit 16 adds the parallax to the subject included in the left-eye image PL4 (4) and the right-eye image PR4 (4') as has been described above with reference to Figure 3B. The selected image 4 is converted into a stereoscopic image enabling stereoscopic viewing when displayed as a part of the catalogue P on the monitor 13.

In this manner, the selected image 4 is displayed as a stereoscopic image out of the nine images displayed on the monitor 13, and the images 1 to 3 and 5 to 9 that were not selected are displayed as planar images. Therefore, by causing the stereoscopic appearance of the selected image to be different from the other images, the user can easily confirm the image he/she has selected. In addition, a catalogue comprising only stereoscopic images is not displayed, which leads to improvement in easy viewing of display screen.

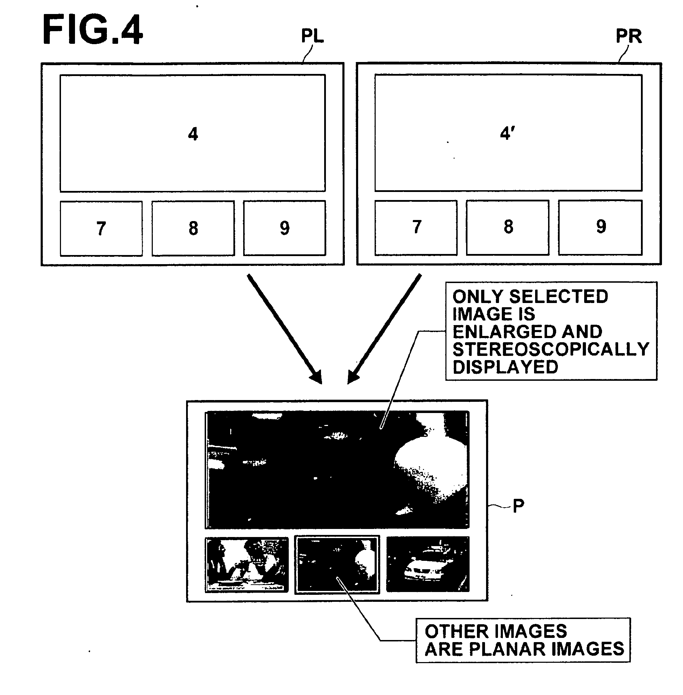

The display conversion unit 16 may enlarge and display the selected image 4. Figure 4 shows a second example of the left-eye image catalogue PL, the eight-eye image catalogue PR, and the catalogue P. In the case where the selected image 4 is displayed by being enlarged, the left-eye image PL4 (4) and the right-eye image PR4 (4') to which the parallax has been added as has been described above are enlarged in the same manner to a size set arbitrarily in advance in the left-eye image catalogue PL and the right-eye image catalogue PR, as shown in Figure 4.

Since the selected image 4 is enlarged and displayed as a stereoscopic image, the user can more easily confirm the image he/she has selected.

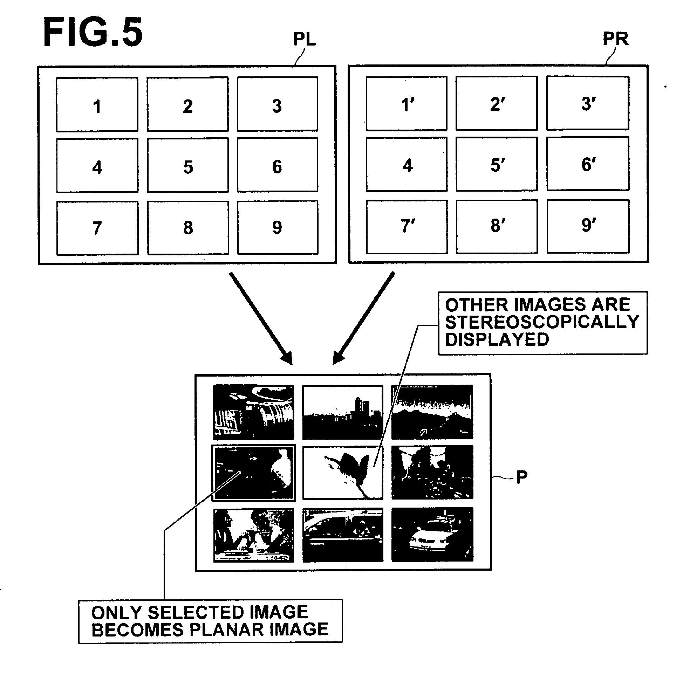

Another manner of conversion of the stereoscopic appearance by the display conversion unit 16 will be described next. Figure 5 shows a third example of the left-eye image catalogue PL, the right-eye image catalogue PR, and the catalogue P. In the case where the image 4, for example, has been selected with use of the operation unit 11 from the nine images displayed as the stereoscopic images shown in Figure 5 as has been described above, the display conversion unit 16 eliminates the parallax of the subject in the left-eye image PL4 (4) and the right-eye image PR4 (4') of the image 4.

More specifically, in the case where the image 4 is represented by one of the stereoscopic image data sets or files read by the reading unit 14, either the left-eye image or the right-eye image of the stereoscopic image is arranged in the left-eye image catalogue PL and in the right-eye image catalogue PR. In the case where the image 4 is represented by planar image data sets read by the reading unit 14, the planar images represented by the image data sets are respectively arranged in the left-eye image catalogue PL and in the right-eye image catalogue PR.

The planar images that are exactly the same are therefore arranged as the selected image 4 in the left-eye image catalogue PL and in the right-eye image catalogue PR, as shown in Figure 5. Therefore, the parallax of the subject can be eliminated. When the catalogue P is displayed as shown in a lower portion of Figure 5, only the selected image 4 is displayed as the planar image while the other eight images from image 1 to image 3 and from image 5 to image 9 that were not selected are displayed as stereoscopic images. Consequently, the selected image looks different from the other images in terms of the stereoscopic appearance thereof, and the user can more easily confirm the image he/she has selected. Consequently, a catalogue solely comprising stereoscopic images is not displayed, which leads to easier viewing of the display screen. The display conversion unit 16 may enlarge and display the selected image 4 in the same manner as has been described above.

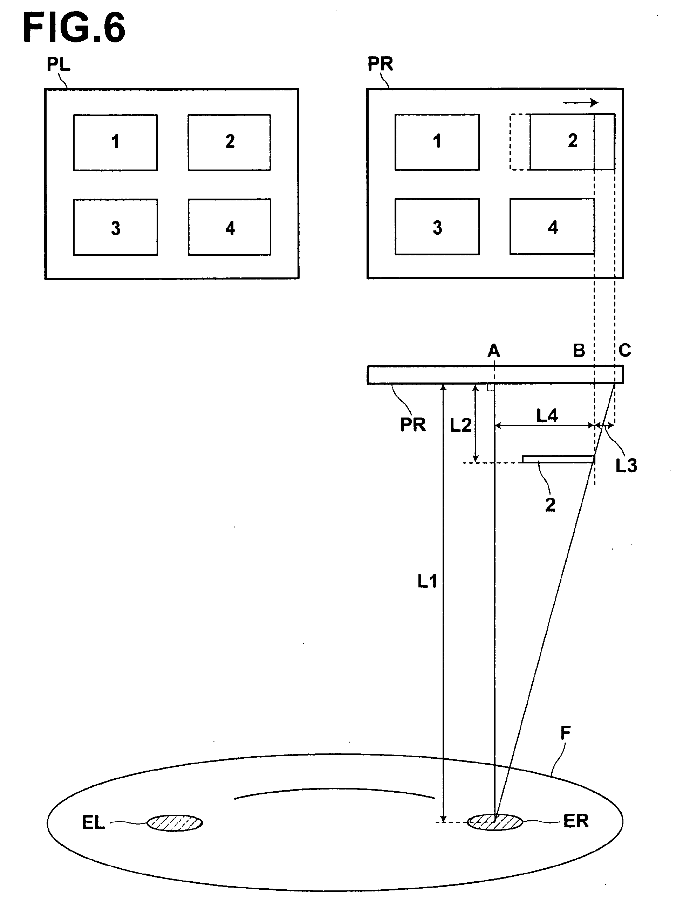

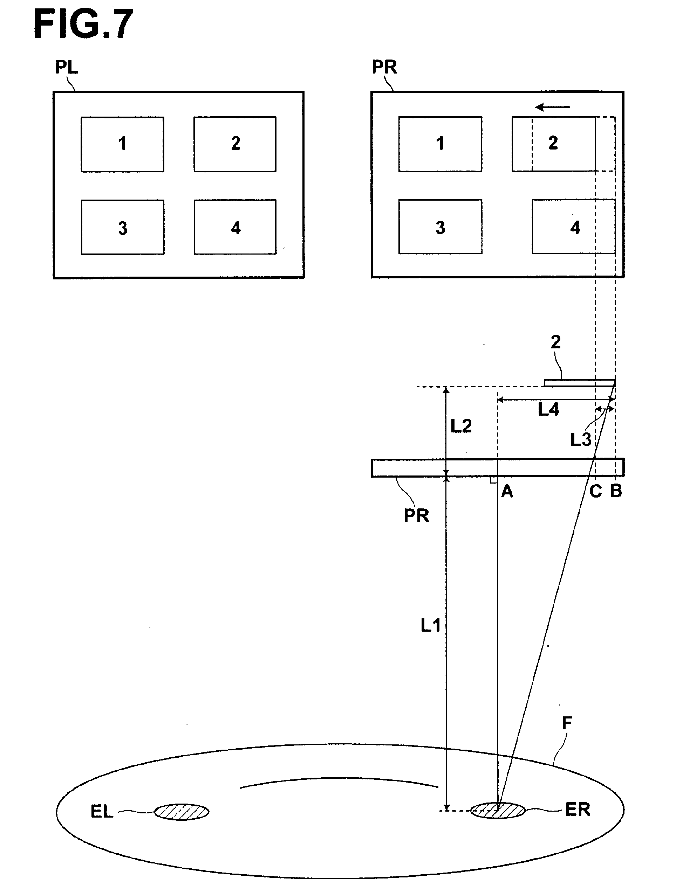

Other manners of display by the display conversion unit 16 will be described below. Figures 6 and 7 show other manners of stereoscopic appearance conversion. For example, upon selection of an image 2 with use of the operation unit 11 from four images being displayed as planar images shown in Figures 6 and 7 as has been described above, the display conversion unit 16 moves either a left-eye image PL2 or a right-eye image PR2 of the image 2 relatively to images 1, 3, and 4 other than the image 2.

More specifically, as shown in Figure 6, let L1 denote the recommended distance for the viewer F from the monitor 13 and let A denote the point in the right-eye image catalogue PR at which the right eye ER of the viewer F looks perpendicularly. In this case, only the planar image PR2 located right of the point A is entirely moved to the right with a frame thereof, as shown by an arrow in Figure 6. The distance L3 of the movement is determined as has been described above with reference to Equation (2). The planar image PL2 in the left-eye image catalogue PL is also moved with a frame thereof by using the same principle as for the image PR2. Consequently, a parallax is added between the left-eye image PL2 and the right-eye image PR2 of the image 2, and the image 2 with the frame appears to have been moved forward relatively to the other images 1, 3, and 4 as shown in Figure 6. In other words, the image 2 seems to pop out.

In the case where only a right-eye image PR1 in the right-eye image catalogue PR is moved to the right as has been described above, for example, the image 1 seems to have been moved backward relatively to the other images 2 to 4, since the image PR1 is located left of the point A. In this manner, the image 1 seems to recede, that is, appears to sink into the screen.

Meanwhile, in the case where the entire right-eye image PR2 in the right-eye image catalogue PR is moved with the frame thereof to the left as shown by an arrow in Figure 7 showing the opposite direction from the arrow in Figure 6 while the left-eye image PL2 in the left-eye image catalogue PL is moved with the frame thereof by using the same principle as for the right-eye image PR2, for example, a parallax is added between the left-eye image and the right-eye image of the image 2. Therefore, the image 2 with the frame seems to be located behind the other images 1, 3, and 4, as shown in Figure 7.

In the case where only the right-eye image PR1 in the right-eye image catalogue PR is moved to the left in the same manner, for example, the image 1 seems to have been located in front of the other images 2 to 4, that is, seems to pop out, since the image PR1 is located to the left of the point A.

As has been described above, whether the selected image 2 seems to pop out or recede is dependent on whether the image to which the parallax is added is located to the right or left of the point A and on whether the image is moved to the right or left.

In the embodiment described above, the selected image 2 is moved. However, the present invention is not necessarily limited thereto, and the images 1, 3, and 4 that were not selected may be moved at the same time.

By relatively moving the image 2 selected in the left-eye image catalogue PL and in the right-eye image catalogue PR, a position of the selected image 2 in the direction of depth seems to be moved relatively to the other images 1, 3, and 4. Therefore, the image seems to pop out or recede, and the stereoscopic appearance of the selected image 2 becomes different from the other images. Consequently, the user can more easily confirm the image he/she has selected.

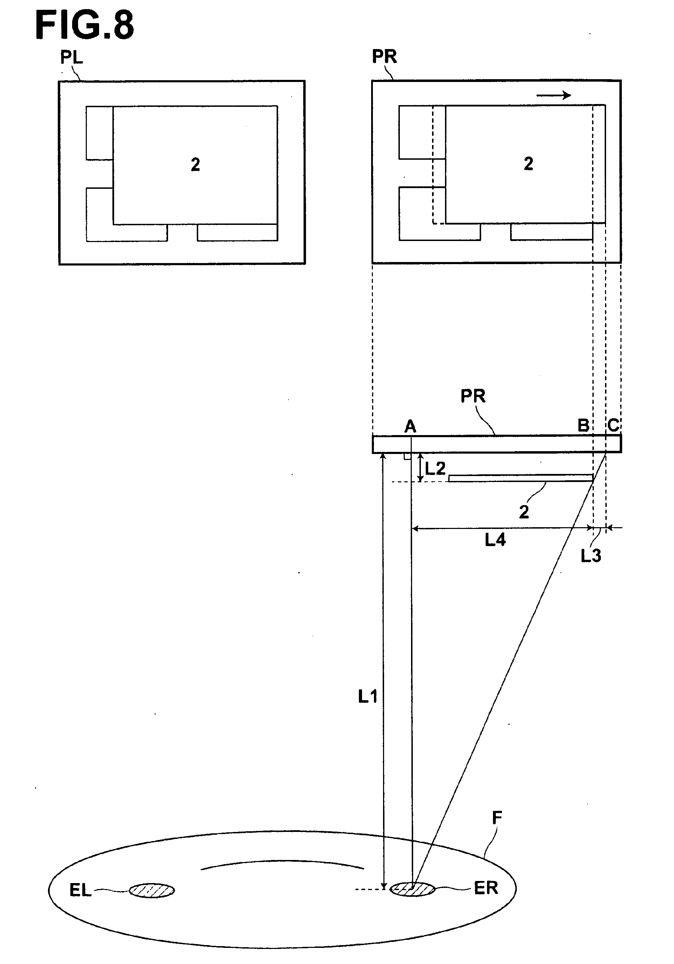

At this time, the display conversion unit 16 may display the selected image 2 after enlarging the image 2. Figure 8 shows another example of stereoscopic appearance conversion. In the case where the selected image 2 is enlarged, the left-eye image PL2 and the right-eye image PR2 are enlarged in the same manner to a size set arbitrarily in advance in the left-eye image catalogue PL and the right-eye image catalogue PR, as shown in Figure 8. Thereafter, only the right-eye image PR2 is moved to the right as shown by an arrow in Figure 8, for example.

In this manner, the image 2 is enlarged with the frame and seems to have been moved in front of the other images 1, 3, and 4, as shown in Figure 8. In other words, the image 2 seems to have been enlarged and to pop out, and the user can more easily confirm the image he/she has selected.

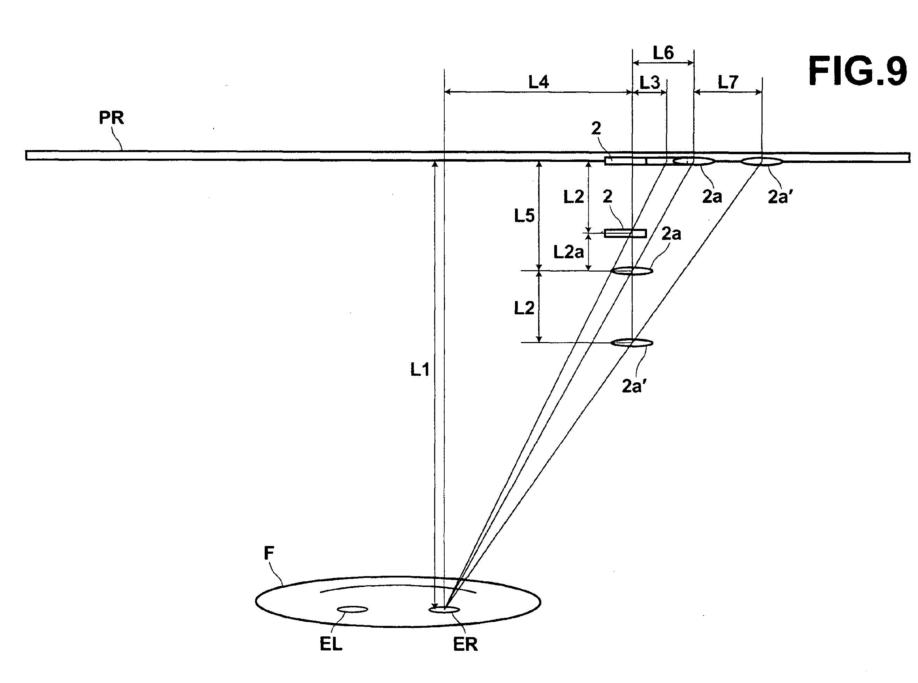

In the case where the stereoscopic appearance is changed by making the selected image with the frame appear to pop out or recede as has been described above, the selected image may be a stereoscopic image. Figure 9 shows how a parallax is added in the case of making a stereoscopic image appear to pop out with a frame.

As shown in Figure 9, in the right-eye image catalogue PR, in the case where a selected stereoscopic image 2 is caused to pop out by a distance L2 for example, a subject 2a that seems to be located forward by a distance L2a in the stereoscopic image 2 is caused to pop out by the distance L2 with the frame of the stereoscopic image 2. In other words, in order to make the subject 2a appear to be located at a position 2a', the subject 2a is moved to the right by a distance L7. The distance L7 is determined to satisfy Equation (6) derived from Equations (3) to (5) below:

$$(L7+L6):(L5+L2) = (L7+L6+L4):L1 \qquad (3)$$

$$L6:L5 = (L6+L4):L1 \qquad (4)$$

$$L3:L2 = (L3+L4):L1 \qquad (5)$$

$$L7 = L4 \times L2\{(2 \times L5-L1)/(L5-L1)(L1-L5+L2)\} \qquad (6)$$

For the stereoscopic image 2 in the left-eye image catalogue PL, the subject 2a is moved according to the same principle as for the right-eye image catalogue PR. In this manner, the image 2 with the frame is caused to pop out by the distance L2, and the subject 2a in the image 2 also seems to be located forward by the distance L2. Therefore, the stereoscopic image 2 can be caused to pop out with the frame, with the image 2 still enabling stereoscopic vision.

The display conversion unit 16 carries out the display conversion processing on the stereoscopic appearance as has been described above. When the display conversion processing by the display conversion unit 16 ends at Step S6 in Figure 2, the stereoscopic display processing by the stereoscopic display apparatus 1 ends.

As has been described above, according to the present invention, a plurality of images are displayed as a catalogue of planar or stereoscopic images from which at least one of the images is selected, and the stereoscopic appearance of the at least one selected image is converted and displayed. Therefore, a user can easily confirm the at least one image he/she has selected, by causing the at least one selected image to be different from the other images in terms of the stereoscopic appearance thereof. In addition, a catalogue solely comprising stereoscopic images is not displayed, which leads to easier confirmation of a screen.

The stereoscopic display apparatus, the stereoscopic display method, and a program of the present invention are not necessarily limited to the embodiment described above, and can be modified within the scope of the present invention.

**Claims**

1. A stereoscopic display apparatus that generates and displays a stereoscopic image from at least a pair of planar images, the apparatus comprising:

   a display (13) for displaying a catalogue of images as planar images or stereoscopic images;
   an image selector (11) for selecting at least one of the images from the catalogue displayed on the display(13); and
   a display converter (16) for converting the stereoscopic appearance of the at least one image selected by the image selector (11).

2. The stereoscopic display apparatus according to Claim 1, wherein the display converter (16) converts the stereoscopic appearance by changing a parallax of a subject included in the at least one selected image.

3. The stereoscopic display apparatus according to Claim 2, wherein the display converter (16) adds the parallax to the subject in the at least one selected image when the images are being displayed as the planar images in the catalogue.

4. The stereoscopic display apparatus according to Claim 2, wherein the display converter (16) eliminates the parallax of the subject in the at least one selected image when the images are being displayed as the stereoscopic images in the catalogue.

5. The stereoscopic display apparatus according to Claim 1, wherein the display converter (16) moves the at least one selected image relatively to the other images.

6. The stereoscopic display apparatus according to any one of Claims 1 to 5, wherein the display converter (16) enlarges the at least one selected image.

7. A stereoscopic display method that generates and displays a stereoscopic image from at least a pair of planar images, the method comprising the steps of:

> displaying a catalogue of images as planar images or stereoscopic images;
> selecting at least one of the images from the displayed catalogue; and
> converting the stereoscopic appearance of the at least one selected image.

8. A computer-readable recording medium storing a stereoscopic display program that causes a computer to generate and display a stereoscopic image from at least a pair of planar images, the program comprising the procedures of:

> displaying a catalogue of images as planar images or stereoscopic images;
> selecting at least one of the images from the displayed catalogue; and
> converting the stereoscopic appearance of the at least one selected image.

# FIG.1

**1**

**11**

**21**

| OPERATION UNIT |
|---|

**17**

| DATA COMPRESSION UNIT |
|---|

**14**

| READING UNIT |
|---|

**20**

| INTERNAL MEMORY (BUFFER MEMORY) |
|---|

**10**

| IMAGE INPUT UNIT |
|---|

**15**

| CATALOG GENERATION UNIT |
|---|

**12**

**13**

| DISPLAY CONTROL UNIT |
|---|

| MONITOR |
|---|

**16**

| DISPLAY CONVERSION UNIT |
|---|

**18**

**19**

| MEDIA CONTROL UNIT |
|---|

| RECORDING MEDIUM |
|---|

# FIG.2

```
          ( START )
              │
              ▼                    S1
   ┌─────────────────────────┐
   │      INPUT IMAGES        │
   └─────────────────────────┘
              │
              ▼                    S2
   ┌─────────────────────────┐
   │      READ IMAGES         │
   └─────────────────────────┘
              │
              ▼                    S3
   ┌─────────────────────────┐
   │   GENERATE CATALOGS      │
   └─────────────────────────┘
              │
              ▼                    S4
   ┌─────────────────────────┐
   │    DISPLAY CATALOG       │
   └─────────────────────────┘
              │
              ▼                    S5
   ┌─────────────────────────┐
   │     SELECT IMAGE         │
   └─────────────────────────┘
              │
              ▼                    S6
   ┌─────────────────────────┐
   │  CONVERT STEREOSCOPIC    │
   │ APPEARANCE OF SELECTED   │
   │   IMAGE AND DISPLAY      │
   └─────────────────────────┘
              │
              ▼
          (  END  )
```

# FIG.3A

PL

PR

| 1 | 2 | 3 |
| 4 | 5 | 6 |
| 7 | 8 | 9 |

| 1 | 2 | 3 |
| 4' | 5 | 6 |
| 7 | 8 | 9 |

OTHER
IMAGES
ARE PLANAR
IMAGES

P

ONLY SELECTED IMAGE IS
STEREOSCOPICALLY DISPLAYED

# FIG.3B

# FIG.4

PL

PR

| 4 | 4' |

| 7 | 8 | 9 | 7 | 8 | 9 |

ONLY SELECTED
IMAGE IS
ENLARGED AND
STEREOSCOPICALLY
DISPLAYED

P

OTHER IMAGES
ARE PLANAR IMAGES

# FIG.5

PL

PR

| 1 | 2 | 3 |
|---|---|---|
| 4 | 5 | 6 |
| 7 | 8 | 9 |

| 1′ | 2′ | 3′ |
|---|---|---|
| 4 | 5′ | 6′ |
| 7′ | 8′ | 9′ |

OTHER IMAGES ARE
STEREOSCOPICALLY
DISPLAYED

P

ONLY SELECTED IMAGE
BECOMES PLANAR IMAGE

# FIG.6

PL

PR

A    B    C

PR    L2    L4    L3

2

L1

F

EL    ER

# FIG.7

# FIG.8

FIG.9

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2008005203 A

- US 7210836 B